# EUROPÄISCHE PATENTANMELDUNG

(11) **EP 4 586 548 A1**
(43) Veröffentlichungstag der Anmeldung: **16.07.2025**
(21) Anmeldenummer: 24151625.1
(22) Anmeldetag: 12.01.2024
(51) Int. Cl.: H04L 9/40

(54) **VERFAHREN ZUM KONFIGURIEREN EINES HONEYPOTS**

(71) Anmelder: Robert Bosch GmbH, 70442 Stuttgart (DE)
(72) Erfinder: Ilg, Niclas, 72119 Ammerbuch (DE); Huth, Christopher, 74076 Heilbronn (DE); Sisejkovic, Dominik, 13089 Berlin (DE)

(57) **Zusammenfassung**

Gemäß verschiedenen Ausführungsformen wird ein Verfahren zum Konfigurieren eines Honeypots beschrieben, aufweisend Implementieren eines Honeypots, Durchführen von mindestens einem Angriff auf den Honeypot mittels eines Large-Language-Modells, Ermitteln einer Bewertung des mindestens einen Angriffs; und Konfigurieren des Honeypots abhängig von der Bewertung des mindestens einen Angriffs.

## Beschreibung

Die vorliegende Offenbarung bezieht sich auf Verfahren zum Konfigurieren eines Honeypots.

Die Anzahl von vernetzten Datenverarbeitungsvorrichtungen (inklusive eingebetteter Geräte) steigt rapide an. Ein wichtiger Aspekt all dieser Geräte - seien es Server-Computer im Internet oder Steuereinrichtungen im Automobil- oder im I-oT-Bereich - ist die Produktsicherheit. Honeypots sind Attrappen, die ein solches wertvolles (Ziel-)System imitieren, um Angreifer anzulocken und Informationen über deren Angriffsstrategien und -ziele zu gewinnen. Vor allem in der Unternehmens-IT sind Honeypots ein etabliertes Tool zur Bedrohungsanalyse und sie werden inzwischen auch im Bereich des (Industrial) Internet of Things ((I)IoT) eingesetzt.

Um diesen Zweck effektiv zu erfüllen, müssen Honeypots das Interesse von Angreifern wecken und möglichst lange aufrechterhalten, d.h. insbesondere glaubwürdig sein und Schwachstellen simulieren oder suggerieren, damit ein Angreifer möglichst viel mit einem jeweiligen Honeypot interagiert.

Es sind deshalb Herangehensweisen zur Ermittlung von Konfigurationen für effektive Honeypots wünschenswert.

Gemäß verschiedenen Ausführungsformen wird ein Verfahren zum Konfigurieren eines Honeypots bereitgestellt, aufweisend Implementieren eines Honeypots, Durchführen von mindestens einem Angriff auf den Honeypot mittels eines Large-Language-Modells, Ermitteln einer Bewertung des mindestens einen Angriffs; und Konfigurieren des Honeypots abhängig von der Bewertung des mindestens einen Angriffs.

Das Konfigurieren kann hierbei bedeuten, dass die Konfiguration, mit der der Honeypot implementiert wurde, beibehalten wird oder geändert wird. Beispielsweise wird sie beibehalten, wenn die Bewertung über einem vorgegebenen Minimum (Schwellwert) liegt, d.h. ein vorgegebenes Qualitätskriterium erfüllt. Die Konfiguration kann automatisch erfolgen (z.B. automatisch mehrere Konfigurationen getestet) und die beste (die mit der höchsten Bewertung(en) eines oder mehrerer Angriffe) ausgewählt werden.

Das oben beschriebene Verfahren ermöglicht eine automatische Bewertung der Qualität eines interaktiven Honeypots unabhängig von dem Zielsystem, das der Honeypot nachahmt und, auf der Grundlage der Bewertungen für unterschiedliche Konfigurationen des Honeypots, der Ermittlung der Konfiguration für den Honeypot, sodass dieser seinen Zweck effektiv erfüllt.

Im Folgenden werden verschiedene Ausführungsbeispiele angegeben.

Ausführungsbeispiel 1 ist ein Verfahren zum Konfigurieren eines Honeypots, wie oben beschrieben.

Ausführungsbeispiel 2 ist ein Verfahren nach Ausführungsbeispiel 1, wobei zum Ermitteln der Bewertung des mindestens einen Angriffs hinsichtlich der Zahl der Interaktionen des Large-Language-Modells mit dem Honeypot bewertet wird.

Je mehr Interaktionen stattfinden, desto höher wird der mindestens eine Angriff beispielsweise bewertet. Bei einem realen Angriff kann die Zahl der Interaktionen, die ein Angreifer durchführt, als Maß für sein Interesse an dem Honeypot gesehen werden. Bei Verwendung entsprechender Bewertungen können deshalb interessante Honeypots erzeugt werden. Die Bewertungsermittlung kann dabei über mehrere Angriffe mitteln: Erfolgen beispielsweise bei zwei Angriffen jeweils fünfzig Interaktionen und bei einem nur zehn, so kann dies trotzdem eine gute Bewertung geben. Jeder Angriff entspricht beispielsweise der Verfolgung einer jeweiligen Schwachstelle (d.h. dem Versuch, eine bestimmte jeweilige Schwachstelle auszunutzen).

Ausführungsbeispiel 3 ist ein Verfahren nach Ausführungsbeispiel 1 oder 2, wobei das Konfigurieren des Honeypots abhängig von der Bewertung des mindestens einen Angriffs aufweist, Ermitteln, ob die Bewertung des mindestens einen Angriffs über einem vorgegebenen Schwellwert liegt und, in Reaktion darauf, dass die Bewertung des mindestens einen Angriffs nicht über dem vorgegebenen Schwellwert liegt, Ändern des Verhaltens des Honeypots in einen Zustand, in dem sich der Honeypot befunden hat, als das Large-Language-Modell bei dem Angriff keinen Fortschritt mehr erzielt hat.

Es wird also gegebenenfalls die Konfiguration des Honeypots derart angepasst, dass Angriffe, die nicht ausreichend interessant sind (die also z.B. das LLM nach wenigen Interaktionen abgebrochen hat), interessanter gemacht werden, indem das Verhalten des Honeypots in einen Zustand am Ende eines bisherigen Angriffsversuchs geändert wird.

Ausführungsbeispiel 4 ist ein Verfahren nach einem der Ausführungsbeispiele 1 bis 3, wobei das Durchführen des mindestens einen Angriffs auf den Honeypot das Erzeugen mindestens einer Eingabe für eine Befehlszeilenschnittstelle, die der Honeypot simuliert, durch das Large-Language-Modell und das Zuführen der mindestens einen erzeugten Eingabe zu der simulierten Befehlszeilenschnittstelle aufweist.

Befehlszeilenschnittstellen erwarten Eingaben in Textform. Diese können von einem Large-Language-Modell effektiv und mit korrekter Syntax erzeugt werden. Eine Antwort der Befehlszeilenschnittstelle kann dann wieder dem Large-Language-Modell (als Prompt) zugeführt werden, sodass dies eine neue Eingabe erzeugen kann.

Ausführungsbeispiel 5 ist ein Verfahren nach einem der Ausführungsbeispiele 1 bis 4, aufweisend Trainieren oder Nachtrainieren des Large-Language-Modells auf der Grundlage von Beispielen (z.B. kurzen Programmen wie Skripte) für die Ausnutzung von bekannten Schwachstellen.

So kann die Leistungsfähigkeit des Large-Language-Modells hinsichtlich korrekter Eingaben für den Honeypot erhöht werden und so Bewertungen gewonnen werden, die der Realität besser entsprechen.

Ausführungsbeispiel 6 ist ein Verfahren nach einem der Ausführungsbeispiele 1 bis 5, aufweisend Implementieren des Honeypots für jede mehrerer Konfigurationen, Durchführen, für jede Konfiguration, von mindestens einem Angriff auf den Honeypot mittels eines Large-Language-Modells und Ermitteln einer Bewertung des mindestens einen Angriffs für jede Konfiguration. Auswählen einer Konfiguration des Honeypots aus den mehreren Konfigurationen, die die beste Bewertung liefert und Konfigurieren des Honeypots gemäß der ausgewählten Konfiguration.

Es können also mehrere Konfigurationen getestet werden, die auch durch zufällige Änderungen (Mutationen) auseinander hervorgehen können. Das Erzeugen der Konfigurationen, das Testen und letztlich die Auswahl der besten Konfiguration (z.B. die, die für eine vorgegebene Menge von Angriffen im Mittel die höchste Bewertung, z.B. die höchste Anzahl von Interaktionen, liefert) kann automatisch erfolgen.

Ausführungsbeispiel 7 ist eine Honeypot-Konfigurationseinrichtung, eingerichtet zum Durchführen eines Verfahrens nach einem der Ausführungsbeispiele 1 bis 6.

Ausführungsbeispiel 8 ist ein Computerprogramm mit Befehlen, die, wenn sie durch einen Prozessor ausgeführt werden, bewirken, dass der Prozessor ein Verfahren nach einem der Ausführungsbeispiele 1 bis 6 durchführt. Ausführungsbeispiel 9 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 6 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
- Figur 1: zeigt ein Computernetzwerk.
- Figur 2: veranschaulicht das Ermitteln der Konfiguration eines Honeypots gemäß einer Ausführungsform.
- Figur 3: zeigt ein Ablaufdiagramm, das ein Verfahren zum Konfigurieren eines Honeypots gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

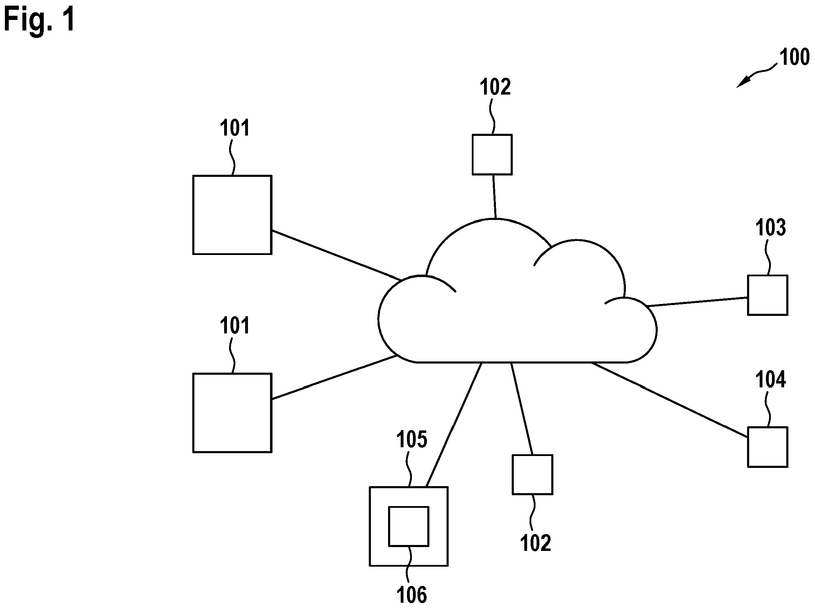

Figur 1 zeigt ein Computernetzwerk 100. Das Computernetzwerk 100 enthält eine Vielzahl von Datenverarbeitungsvorrichtungen 101-105, die durch Kommunikationsverbindungen miteinander verbunden sind. Die Datenverarbeitungsvorrichtungen 101-105 beinhalten z.B. Server-Computer 101 und Steuergeräte 102 sowie und Benutzerendgeräte 103, 104.

Server-Computer 101 stellen verschiedene Dienste zur Verfügung, wie Internet-Seiten, Bankingportale etc. Ein Steuergerät 102 ist z.B. eine Steuereinrichtung für eine Robotervorrichtung wie z.B. eine Steuereinrichtung in einem autonomen Fahrzeug. Die Server-Computer 101 und Steuergeräte 102 erfüllen also verschiedene Aufgaben und typischerweise kann von einem Benutzerendgerät 103, 104 auf einen Server-Computer 101 oder ein Steuergerät 102 zugegriffen werden. Dies ist insbesondere dann der Fall, wenn ein Server-Computer 101 einem Benutzer eine Funktionalität anbietet, wie z.B. ein Banking-Portal. Aber auch ein Steuergerät 102 kann den Zugriff von außerhalb ermöglichen (z.B. damit es konfiguriert werden kann). Je nach Aufgabe eines Server-Computers 101 oder Steuergeräts 102 können diese sicherheitsrelevante Daten speichern und sicherheitsrelevante Aufgaben ausführen. Dementsprechend müssen sie gegen Angreifer geschützt werden. Beispielsweise könnte ein Angreifer, der eines der Benutzerendgeräte 104 verwendet, durch einen erfolgreichen Angriff geheime Daten (wie z.B. Schlüssel) in seinen Besitz bekommen, Konten manipulieren oder auch ein Steuergerät 102 so manipulieren, dass es zu einem Unfall kommt.

Eine Sicherheitsmaßnahme gegenüber solchen Angriffen ist ein sogenannter Honeypot 106 (der von einer der Datenverarbeitungsvorrichtungen 105 implementiert wird). Er stellt vermeintlich eine Funktionalität bereit und dient so als Köder, um potenzielle Angreifer anzulocken. Dabei wird er aber von geheimen Informationen oder kritischer Funktionalität isoliert, so dass Angriffe auf ihn in einer kontrollierten Umgebung erfolgen und das Risiko einer Beeinträchtigung der eigentlichen Funktionalität minimiert wird. So ermöglicht er, Kenntnisse über Angriffe auf ein Zielsystem (z.B. einen der Server-Computer 101 oder eines der Steuergeräte 102) - und damit die Bedrohungslandschaft - zu gewinnen, auf die durch die Implementierung mit geeigneten Maßnahmen auf dem Zielsystem reagiert werden kann, ohne dass diese Angriffe das Zielsystem gefährden.

Vor allem für die Automobilindustrie sind Honeypots interessant, da es kaum Daten über echte Angriffe gibt. Gemäß verschiedenen Ausführungsformen kann der Honeypot 106 also beispielsweise in einem Fahrzeug implementiert werden. Das Computernetzwerk 100 kann dann zumindest teilweise ein internes Netzwerk des Fahrzeugs beinhalten (aber auch ein Netzwerk, die Konnektivität zu dem Fahrzeug von außerhalb herstellen, wie z.B. ein Mobilfunknetzwerk).

Ein Honeypot ist also ein Täuschungssystem, das ein Zielsystem (auch als "wertvolles Ziel" bezeichnet) imitiert. Er verleitet Angreifer dazu, den Honeypot anzugreifen und Angriffsvektoren zu enthüllen, die auf das echte wertvolle Ziel abzielen. So ist beispielsweise ein Webserver (bzw. die Webserver-Software) eine beliebte Option, die von einem Honeypot nachgeahmt wird. Da Webserver einen großen Teil des öffentlichen Internets ausmachen, ist es wichtig, Bedrohungen, die auf sie abzielen, kontinuierlich zu überwachen. In anderen Worten sind Honeypots Lockvogel-Ressourcen, die ein wertvolles Zielsystem nachahmen, um Angreifer anzulocken. Honeypots werden eingesetzt, um angegriffen zu werden, damit die Verteidiger, die die Systeme genau überwachen, Erkenntnisse über die Strategien des Gegners gewinnen. Der Wert dieser Erkenntnisse hängt von der Anzahl der Interaktionsmöglichkeiten ab, die der Honeypot dem Angreifer bietet.

Honeypots mit mittlerer Interaktion sind Computerprogramme, die interne Merkmale ihres Zielsystems simulieren. Dazu können unter anderem eine System-Shell, ein Dateisystem und interne Dienste gehören. Die Funktionalitäten des Betriebssystems (OS) werden typischerweise manuell (re-)implementiert, damit sie der Funktionalität des Zielsystems entsprechen. Dieses Vorgehen ist jedoch nicht nur fehleranfällig, sondern die meisten Honeypot-Entwickler implementieren beispielsweise nur eine Teilmenge der System-Shell-Befehle, von denen sie erwarten, dass sie von Angreifern verwendet werden. Derzeit gibt es kein Werkzeug, mit dem automatisch überprüft werden kann, ob die Betriebssystemfunktionalitäten fehlerfrei implementiert sind und ob die implementierten Funktionalitäten einen ausreichenden Teil des Betriebssystems abdecken, um für Angreifer interessant und glaubwürdig zu sein.

Honeypots können mittels sogenannter CPNs (Coloured Petri Nets) formal analysiert werden. In diesem Fall wird der Honeypot in Form von Zuständen und Übergängen dargestellt - ähnlich wie bei einem Zustandsautomaten -, um potenzielle Angreiferpfade abzubilden. Dies wird verwendet, um zu analysieren, wo der Honeypot Sackgassen aufweist und wie ein Angreifer sich innerhalb eines Systems bewegen kann. Zwar könnte ein Entwickler ein CPN eines Honeypots mit dem jeweiligen Zielsystem vergleichen, doch muss der Entwickler dazu das gesamte Zielsystem im Honeypot implementieren, um einen Honeypot mit zu dem Zielsystem passenden CPN zu erhalten. In der Praxis sollte ein Honeypot jedoch keine Befehle ausführen, die dazu verwendet werden können, Dritten oder dem System selbst zu schaden, sondern nur Shell-Ausgaben erzeugen, die auf eine erfolgreiche Ausführung hindeuten. Außerdem deckt eine CPN keine Fehler in der Implementierung der jeweiligen Funktionalitäten auf (z. B. Tippfehler) und das Verhalten eines Angreifers ist nicht standardmäßig in der Analyse enthalten, sondern muss manuell identifiziert und eingefügt werden.

Um einen effektiven Honeypot bereitzustellen, ist es aber wichtig, sicherzustellen, dass ein Honeypot das jeweilige Zielsystem für Angreifer glaubwürdig (und ausreichend vollständig) imitiert und auch Schwachstellen anbietet (aber nur simuliert, d.h. es soll durch den Honeypot nicht wirklich ein Sicherheitsrisiko entstehen), damit sich ein Angreifer möglichst lange mit dem Honeypot beschäftigt (d.h. möglichst viel mit dem Honeypot) interagiert, sodass möglichst viel über das Verhalten des Angreifers gelernt werden kann.

Gemäß verschiedenen Ausführungsformen wird ein LLM (Large Language Model), d.h. ein (maschinelles) Large-Language-Modell, verwendet, um einen Angreifer zu simulieren, der einen Honeypot angreift. Auf der Grundlage der Interaktionen zwischen LLM und Honeypot kann dann bewertet werden, wie gut der Honeypot das jeweilige Zielsystem auf für Angreifer glaubwürdige und interessante Weise nachahmt und auf der Grundlage der Bewertung wiederum seine Qualität in dieser Hinsicht verbessert werden.

Dies ermöglicht eine automatische Bewertung der Qualität der Simulation eines Zielsystems durch einen Honeypot. Diese automatische Bewertung kann in automatische Honeypot-Entwicklungs- oder Konfigurationsprozesse integriert werden. Die automatische Bewertung eines Honeypots ist unabhängig von (z.B.) dem Betriebssystem, das der Honeypot nachahmt. Die Bewertung basiert auf einem wahrscheinlichen Angreiferverhalten (wie es durch das LLM repräsentiert ist). So kann die Konfiguration des Honeypots beispielsweise an die Wahrscheinlichkeit angepasst werden, dass eine bestimmte Funktion in Angriffen genutzt wird. Bei der Bewertung wird beispielsweise nicht nur das Vorhandensein, sondern auch der Qualität der vom Honeypot implementierten Funktionalitäten des Zielsystems. Die Bewertung basiert auf der Sichtweise des Angreifers, um Sicherheitsmaßnahmen zu bewerten, die ein Angreifer nicht entdecken sollte und folgt damit einem Black-Box-Ansatz.

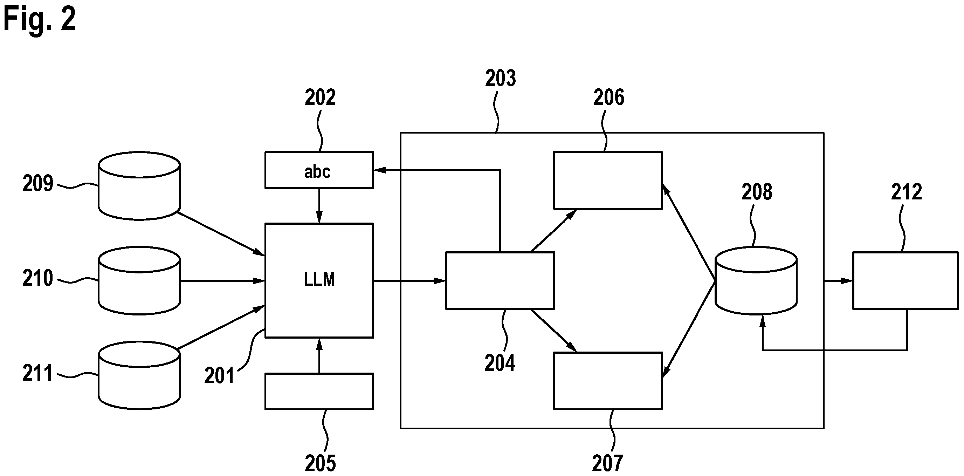

Figur 2 veranschaulicht das Ermitteln der Konfiguration 208 eines Honeypots 202 gemäß einer Ausführungsform.

Die Ermittlung einer Konfiguration für den Honeypot erfolgt durch eine Honeypot-Erzeugungseinrichtung (oder Honeypot-Konfigurationseinrichtung), die beispielsweise einem der Benutzerendgeräte 104 entspricht (z.B. einem Computer, mit dem ein Benutzer (wie z.B. ein Systemadministrator), den Honeypot 106 konfiguriert und die Datenverarbeitungsvorrichtung 105 instruiert, den so konfigurierten Honeypot 106 bereitzustellen). Die hierin beschriebenen Verfahren zur Erzeugung eines Honeypots werden also beispielsweise von so einer Honeypot-Erzeugungseinrichtung (beispielsweise automatisch) durchgeführt.

Ein LLM 201 (z.B. implementiert von der Honeypot-Erzeugungseinrichtung) wird mittels eines entsprechend Prompts 202 dazu veranlasst, einen Angriff auf einen Honeypot 203 durchzuführen (welcher für die Dauer des Konfigurierens von der Honeypot-Erzeugungseinrichtung aber auch einer anderen Datenverarbeitungseinrichtung implementiert werden kann). Der Honeypot 203 implementiert (bzw. simuliert) eine Befehlszeilenschnittstelle (z.B. eine System-Shell) 204 eines Zielsystems 205, ein Dateisystem 206 des Zielsystems 205 und Dienste 207 des Zielsystems 205 gemäß seiner Konfiguration 208. Die simulierte Befehlszeilenschnittstelle 204 kann auf das Dateisystem 206 und die Dienste 207 des Honeypots 202 zugreifen.

Der Angriff durch das LLM 201 besteht nun beispielsweise darin, dass das LLM 201 Befehle für die Befehlszeilenschnittstelle 204 ausgibt, diese der Befehlszeilenschnittstelle 204 zugeführt werden (z.B. kann das LLM 201 entsprechend an dem Honeypot 203 angebunden werden) und die Reaktionen der Befehlszeilenschnittstelle 204 wiederum dem LLM 201 zugeführt werden (das durch den ursprünglichen Prompt 202 oder durch weitere Prompts 202, mit denen die Reaktionen dem LLM 201 zugeführt werden dazu veranlasst wird, mit dem Angriff soweit möglich fortzufahren).

Wird ein (von einem Drittanbieter) vorgefertigtes LLM verwendet, so hat dies möglicherweise einen Filter, der verhindert, dass es Angriffe erzeugt. Es gibt jedoch Möglichkeiten, diese Filter zu umgehen. Alternativ kann ein LLM speziell für die Erzeugung von Angriffen auf Honeypots trainiert werden oder zumindest ein Basismodell neu trainiert werden, um Angriffe durchzuführen.

Das Training des LLMs 201 (oder ggf. auch die Erzeugung der Prompts 202) bezieht beispielsweise Informationen aus den folgenden Komponenten mit ein:
- Schwachstellendatenbank 209: Informationen über Schwachstellen können in Form einer CVE-Datenbank vorliegen, d. h. sie enthält bekannte Schwachstellen. Angreifer beziehen sich oft auf CVEs, um zu sehen, ob ein System noch eine verwundbare Software enthält, also eine ungepatchte Version, um bekannte Fehler auszunutzen.
- Angriffsdatenbank 210: Während die Schwachstellendatenbank 209 dabei hilft, herauszufinden, welche Schwachstellen sich noch in der jeweiligen Software befinden könnten, reicht diese Information allein nicht aus, um die Schwachstellen auszunutzen. Dafür ist eine Art Programm, wie ein Skript, erforderlich. Die Angriffsdatenbank 210 enthält Beispiele für Skripte, die dazu dienen, gängige Schwachstellen auf automatisierte Weise auszunutzen (d.h. Beispiele für die Ausnutzung von bekannten Schwachstellen).
- Datenbank mit aufgezeichneten und verfolgten Angriffen 211: In dieser Datenbank werden Protokolle und Spuren (engl. traces) von realen Angriffen gespeichert, die vom LLM 201 verwendet werden, diese Angriffe gegen Honeypots zu wiederholen (d.h. nachzuspielen).
- Kritisches Beispielsystem 205: Für das Training des LLMs 201 können ein oder mehrere Beispiele für das Zielsystem 205 verwendet werden. Dadurch wird sichergestellt, dass bestimmte Exploits dem LLM 201 bekannt sind und von dem LLM 201 ausgenutzt werden können.

Das LLM 201 kann beispielsweise mittels verstärkendem Lernen (z.B. RLHF (Reinforcement Learning with Human Feedback)) trainiert werden, d.h. menschlies kann bewertet werden, ob es geeignete Angriffe auf ein jeweiliges Beispiel-Zielsystem 205 durchführt.

Die Konfiguration 208 des Honeypots 202 (was die Konfiguration des Dateisystems 206 und der Dienste beinhaltet) wird gemäß einer Ausführungsform in einem separaten Speicher gespeichert, der von der Befehlszeilenschnittstelle 204 aus nicht zugänglich ist. Diese Konfiguration 208 wird auf der Grundlage des Verlaufs der Interaktion zwischen LLM 201 und Honeypot 202 (speziell mit der Befehlszeilenschnittstelle 204) angepasst (d.h. idealerweise optimiert).

Dazu wird während des simulierten Angriffs (d.h. des durch das LLM 201 durchgeführten Angriffs) beobachtet, wie LLM 201 und Honeypot 202 und insbesondere, wie sich der Honeypot 202 dabei verhält, d.h. wie die Interaktion von dem Verhalten des Honeypots 202 abhängt. Daraus wird eine Bewertung 212 berechnet, die angibt (bzw. schätzt), wie interessant der Honeypot 202 (gemäß seiner aktuellen Konfiguration 208) für einen Angreifer wäre. Besonders interessant sind zum Beispiel anfällige Versionen von Diensten 207 und solche, bei denen ein Angreifer eine umfangreiche Kommunikation benötigt, um eine jeweilige Schwachstelle auszulösen. Dementsprechend kann in die Bewertung beispielsweise die Zahl der Interaktionen, die das LLM 201 für einen Angriffsversuch unternimmt, eingehen. Auf der Grundlage dieser Bewertung wird die Konfiguration 208 ggf. geändert (z.B. mehrere getestet, ggf. zufällig mittels "Mutationen", um zu ermitteln, ob der Honeypot 202 durch so eine Änderung interessanter werden kann, und die beste so ermittelte Konfiguration 208 ausgewählt).

Beispielsweise führt die Honeypot-Konfigurationseinrichtung Folgendes durch:
1. Optional kann ein spezifisches LLM trainiert oder ein Basismodell neu trainiert werden, um keinen Angriffs-Filter zu haben. Andernfalls wird der Filter eines gegebenen LLM 201 umgangen.
2. Es wird ein Prompt 202 erzeugt, um das LLM 201 anzuweisen, den Honeypot 202 anzugreifen.
3. Es wird die (in Reaktion auf den Prompt 202) vom LLM 201 erzeugte Ausgabe an die Befehlszeilenschnittstelle 204 des Honeypots 202 weitergeleitet und ggf. die Antwort der Befehlszeilenschnittstelle 204 in einem weiteren Prompt 202 an das LLM 201 zurückgegeben. Parallel dazu wird die Bewertung 212 ermittelt.
4. Der Schritt 3 wird wiederholt, z.B. bis die ermittelte Bewertung nicht mehr ansteigt (z.B. weil das LLM 201 den oder die Angriff(e) nicht mehr sinnvoll weiterverfolgt) oder auch nach einer bestimmten Zeitspanne oder Zahl von Befehlszeilenschnittstellen-Eingaben

Das Obige kann für mehrere Prompts und Konfigurationen 208 des Honeypots durchgeführt werden, um die Konfiguration 208 zu finden, die für verschiedene Prompts und/oder Angriffe die besten Bewertungen liefert. Diese Konfiguration kann dann ausgewählt werden.

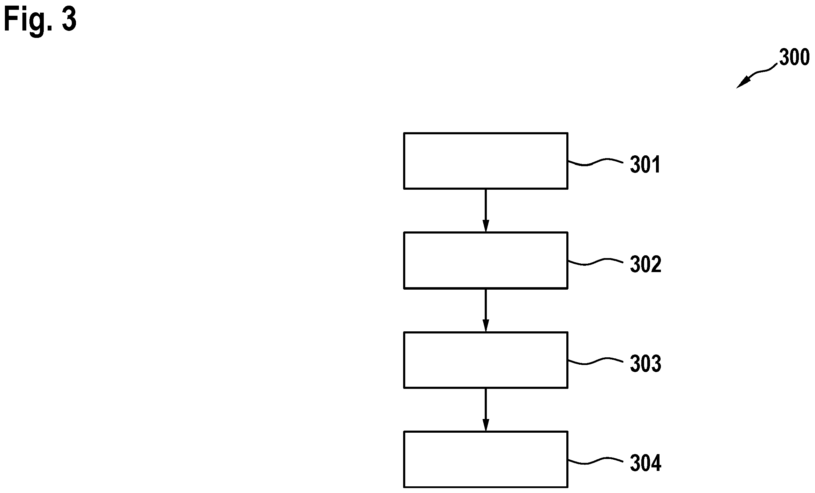

Zusammengefasst wird gemäß verschiedenen Ausführungsformen ein Verfahren bereitgestellt, wie in Figur 3 dargestellt.

Figur 3 zeigt ein Ablaufdiagramm 300, das ein Verfahren zum Konfigurieren eines Honeypots gemäß einer Ausführungsform darstellt.

In 301 wird ein Honeypot implementiert.

In 302 wird mittels eines Large-Language-Modells mindestens ein Angriff auf den Honeypot durchgeführt.

In 303 wird eine Bewertung des mindestens einen Angriffs ermittelt.

In 304 wird der Honeypot abhängig von der Bewertung des mindestens einen Angriffs konfiguriert.

Gemäß verschiedenen Ausführungsformen wird mit anderen Worten ein LLM zum Angriff auf einen Honeypot verwendet, um seine Qualität zu überprüfen und auf der Grundlage des Ergebnisses der Überprüfung ggf. seine Konfiguration zu ändern, um seine Qualität zu erhöhen.

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z.B. implementiert) werden, die durch die Datenverarbeitungseinheit durchgeführt werden.

Das Verfahren ist also gemäß verschiedenen Ausführungen insbesondere computerimplementiert.

## Patentansprüche

1. Verfahren zum Konfigurieren eines Honeypots (106, 203), aufweisend:
Implementieren (301) eines Honeypots (106, 203);
Durchführen (302) von mindestens einem Angriff auf den Honeypot (106, 203) mittels eines Large-Language-Modells (201);
Ermitteln (303) einer Bewertung (212) des mindestens einen Angriffs; und
Konfigurieren (304) des Honeypots (106, 203) abhängig von der Bewertung (212) des mindestens einen Angriffs.

2. Verfahren nach Anspruch 1, wobei zum Ermitteln der Bewertung (212) des mindestens einen Angriffs hinsichtlich der Zahl der Interaktionen des Large-Language-Modells (201) mit dem Honeypot (106, 203) bewertet wird.

3. Verfahren nach Anspruch 1 oder 2, wobei das Konfigurieren des Honeypots (106, 203) abhängig von der Bewertung (212) des mindestens einen Angriffs aufweist, Ermitteln, ob die Bewertung (212) des mindestens einen Angriffs über einem vorgegebenen Schwellwert liegt und, in Reaktion darauf, dass die Bewertung (212) des mindestens einen Angriffs nicht über dem vorgegebenen Schwellwert liegt, Ändern des Verhaltens des Honeypots (106, 203) in dem Zustand, in dem sich der Honeypot (106, 203) befunden hat, als das Large-Language-Modell (201) bei dem Angriff keinen Fortschritt mehr erzielt hat.

4. Verfahren nach einem der Ansprüche 1 bis 3, wobei das Durchführen des mindestens einen Angriffs auf den Honeypot (106, 203) das Erzeugen mindestens einer Eingabe für eine Befehlszeilenschnittstelle (204), die der Honeypot (106, 203) simuliert, durch das Large-Language-Modell (201) und das Zuführen der mindestens einen erzeugten Eingabe zu der simulierten Befehlszeilenschnittstelle (204) aufweist.

5. Verfahren nach einem der Ansprüche 1 bis 4, aufweisend Trainieren oder Nachtrainieren des Large-Language-Modells (201) auf der Grundlage von Beispielen für die Ausnutzung von bekannten Schwachstellen.

6. Verfahren nach einem der Ansprüche 1 bis 5, aufweisend Implementieren des Honeypots (106, 203) für jede mehrerer Konfigurationen (208), Durchführen, für jede Konfiguration (208), von mindestens einem Angriff auf den Honeypot (106, 203) mittels eines Large-Language-Modells (201) und Ermitteln einer Bewertung (212) des mindestens einen Angriffs für jede Konfiguration (208);
Auswählen einer Konfiguration (208) des Honeypots (106, 203) aus den mehreren Konfigurationen (208), die die beste Bewertung (212) liefert; und
Konfigurieren des Honeypots (106, 203) gemäß der ausgewählten Konfiguration (208).

7. Honeypot-Konfigurationseinrichtung (104), eingerichtet zum Durchführen eines Verfahrens nach einem der Ansprüche 1 bis 6.

8. Computerprogramm mit Befehlen, die, wenn sie durch einen Prozessor ausgeführt werden, bewirken, dass der Prozessor ein Verfahren nach einem der Ansprüche 1 bis 6 durchführt.

9. Computerlesbares Medium, das Befehle speichert, die, wenn sie durch einen Prozessor ausgeführt werden, bewirken, dass der Prozessor ein Verfahren nach einem der Ansprüche 1 bis 6 durchführt.
